**Europäisches Patentamt**

(19) **European Patent Office** (11) Publication number: **0 081 610**

**Office européen des brevets** **B1**

(12) **EUROPEAN PATENT SPECIFICATION**

(45) Date of publication of patent specification: **17.12.86** (51) Int. Cl.⁴: **B 64 C 9/16,** B 64 C 9/20

(21) Application number: **81201379.5**

(22) Date of filing: **16.12.81**

(54) **Flap assembly aircraft wing.**

(43) Date of publication of application:
**22.06.83 Bulletin 83/25**

(45) Publication of the grant of the patent:
**17.12.86 Bulletin 86/51**

(84) Designated Contracting States:
**DE FR GB IT NL SE**

(56) References cited:
**DE-A-2 354 420**
**DE-A-2 555 070**
**FR-A-2 076 043**
**FR-A-2 115 081**
**FR-A-2 115 468**
**GB-A-1 433 326**
**GB-A-2 038 737**
**US-A-2 086 085**
**US-A-2 661 166**
**US-A-2 974 903**
**US-A-3 478 988**
**US-A-3 568 957**
**US-A-3 767 140**
**US-A-4 248 395**

(73) Proprietor: **The Boeing Company**
**P.O. Box 3707**
**Seattle Washington 98124 (US)**

(72) Inventor: **Rudolph, Peter K.C.**
**13683 18th Avenue S.W.**
**Seattle Washington 98166 (US)**

(74) Representative: **Madgwick, Paul Roland et al**
**Ladas & Parry Isartorplatz 5**
**D-8000 München 2 (DE)**

Courier Press, Leamington Spa, England.

## Description

The present invention relates to a flap assembly as defined in the introductory part of claim 1. French patent specification 2 115 468 relates to a flap assembly of this kind.

In designing flap assemblies of this kind, many design factors are to be considered. Some of these are obtaining very high lift coefficients, whereby drag is not critical, obtaining a high lift coefficient for take-off of a relatively heavy loaded airplane on a high altitude airport in hot weather conditions, in which situation the drag must be as low as possible, and providing as little drag as possible in cruise condition, in which the flaps are moved in, in their stowed away position.

There is a variety of mechanisms in the prior art for obtaining the required flap motion. The selection of the mechanism in a specific case depends on the relative importance of the design factors, from which some are mentioned above.

The invention has for its object to provide a flap assembly of the kind set forth above, which provides improved fowler motion with relatively small flap deflection, while requiring only a small flap support fairing with low cruise drag.

This object is achieved with the measures mentioned in the characterizing part of claim 1. In this way the aft flap can move rearwardly with substantial fowler motion, so that the flap assembly according to the invention can advantageously provide a high lift low drag condition.

Further advantageous embodiments of the flap assembly according to the invention are characterized in the subclaims.

Other features of the present invention will become apparent from the following detailed description.

Fig. 1 is a sectional view of an aft portion of an airfoil incorporating the flap assembly of the present invention, with the flap being in its stowed position.

Fig. 2 is a view similar to Fig. 1 showing the flap deployed to an intermediate position for take-off.

Fig. 3 is a view similar to Figs. 1 and 2, showing the flap in its fully deployed position.

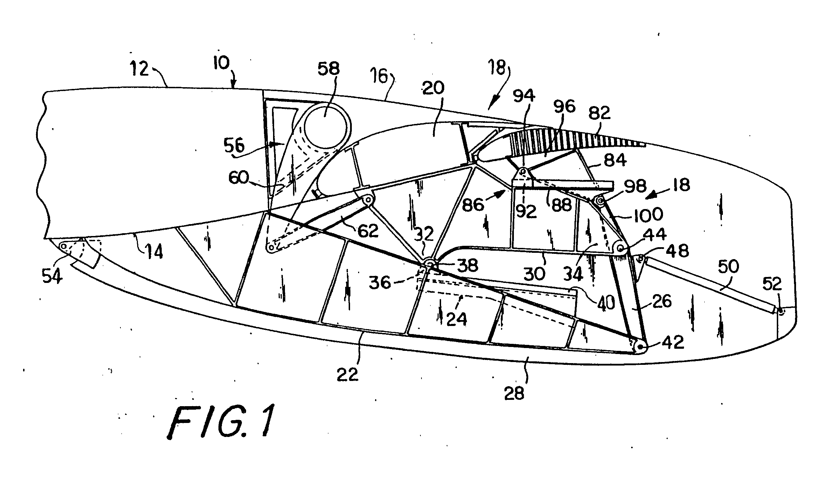

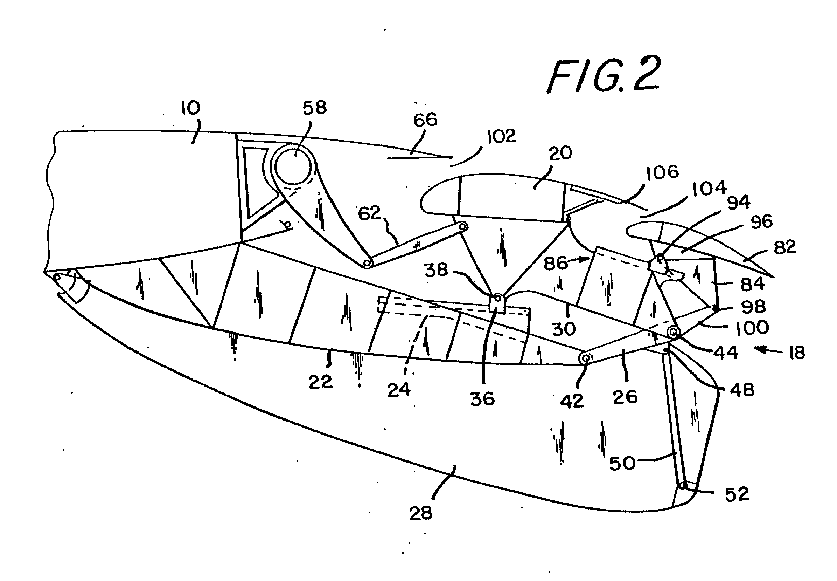

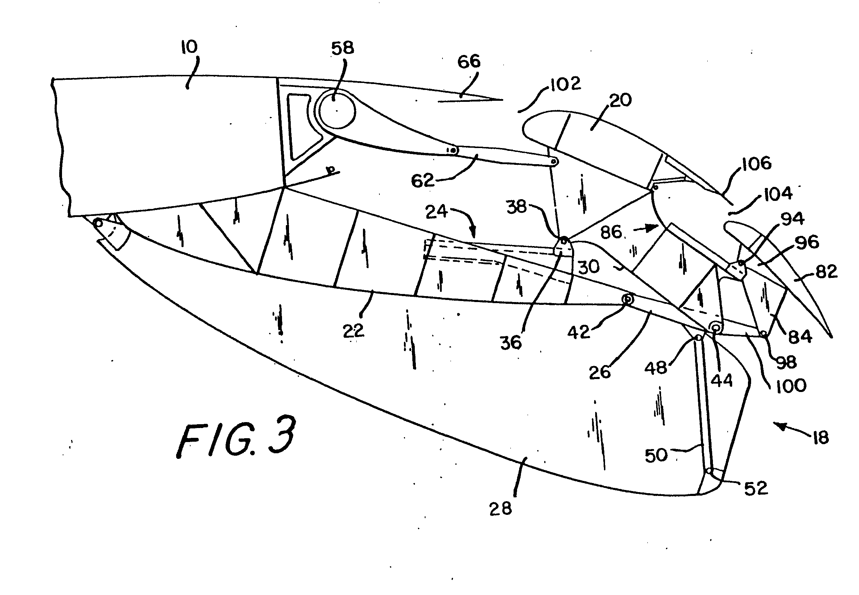

Figs. 1 through 3 show an embodiment of the present invention. There is an airplane wing 10, having an upper surface 12, a lower surface 14, a trailing edge portion 16, and a leading edge (not shown in the drawings for convenience of illustration). The flap assembly 18 comprises a fore flap member 20 and an aft flap member 82, having a stowed position in the trailing edge wing portion 16 (as shown in Fig. 1), and movable through an intermediate position (shown in Fig. 2) to a fully deployed position (shown in Fig. 3). Extending rearwardly from the lower edge of the wing 10, and positioned moderately below the chordwise or longitudinal axis of the wing 10 is a mounting structure 22. With the flap assembly 18 in its stowed position, the mounting structure 22 is positioned directly below the flap assembly 18. The fore flap member 20 is mounted to the structure 22 through a forward track mounting means, generally designated 24, and a rear link member 26. A movable fairing 28 encloses the mounting structure 22, the forward mounting means 24 and the rear link member 26.

Rigidly attached to the bottom side of the flap member 20 is a mounting arm 30. The forward mounting means 24 comprises a slide block 36 (which serves the function of a tracking member) pivotally connected at 38 to the lower end of the forward mounting arm portion 32. This slide block 36 is mounted in a slideway member 40 (which serves the function of a track member), attached to the mounting structure 22. In the particular arrangement shown in Figs. 1 through 3, the slideway member is substantially longitudinally aligned (i.e., aligned with the chordwise axis of the wing 10) with a very moderate downward and rearward slope, and has a straight line configuration.

To avoid the wear problems associated with the line contact of prior art roller carriages on tracks, this invention utilizes moving joints with surface contact. The elements used are bushed pin points, spherical bearing joints and slide blocks. Slide backs can be used, because the tracks used in this invention are straight. It is obvious, that the slide blocks can be replaced by roller carriages with a multitude of rollers in line (lower load than single roller). However, the preferred configuration is the slide block, as shown at 36.

The link member 26 has a lower pivot connection 42 at the extreme rear end of the mounting structure 22. The upper end of the link member 26 is pivotally connected at 44 to the extreme rear end of the mounting arm 34. Pivotally connected at 48 to an intermediate portion of the link 26 is a second link 50, which extends downwardly and rearwardly to connect pivotally at its opposite end 52 to the rear portion of the fairing 28. The fairing 28 is pivotally connected by its forward end at 54 to the bottom side of the wing 10. As will be disclosed hereinafter, rearward movement of the link member 26 causes the second link 50 to swing the fairing 28 downwardly.

The aft flap 82 has a rigid mounting arm 84 connected to its bottom surface. To mount the aft flap 82, there is a second upper track mounting assembly 86, comprising a slideway 88 rigidly connected to the mounting arm 30 that is rigidly connected to the lower side of the fore flap 20. The specific configuration of the mounting arm 30 is such that it is able to support the upper slideway 88 at a location relatively close to the lower surface of the aft flap 82.

A second slide block 92 is pivotally connected at 94 to an upper forward portion 96 of the mounting arm 84. The lower rear end of the mounting arm 84 is pivotally connected at 98 to an upward extension 100 of the rear link 26. Thus, the link 26, with the extension 100, has the lower pivot connection 42, the upper pivot connection 44, and an uppermost pivot connection 98 to the aft flap 82. With this arrangement, the rear link 26, with its extension 100, serves not only as the rear pivot link for the fore flap 20, to operate in conjunction with the first track mounting means, but also serves as the mounting link for the aft flap 82 to act in conjunction with the second track mounting means 86.

Movement of the flap assembly 18 is accomplished through an actuating mechanism 56 comprising a rotary hinge 58 to which is mounted a radially extending crank arm 60. A drive link 62 has a pivot connection between the end of the crank arm 60 and the extreme forward end of the forward mounting arm portion 32 of the fore flap 20.

To describe the operation of the invention, attention is directed first to Fig. 1, which shows the flap assembly 18 in its stowed position. In that position, the flap assembly 18 is concealed in the trailing edge portion 16 of the wing 10, and only the upper rear surface portion 64 of the aft flap 82 is exposed. With the flap assembly 18 in its stowed position, this upper rear surface portion 64 forms a substantial continuous aerodynamic surface with the upper wing surface 12 at its rear cove panel 66. This is the location of the flap assembly 18 for cruise configuration.

Counterclockwise rotation of the rotary hinge 58 pushes the mounting arm 30 rearwardly to cause the lower slide block 36 to move rearwardly, and also to cause the rear link 26 to swing rearwardly about the lower pivot location 42. This initial rearward movement causes the fore flap 20 to move rearwardly with substantial Fowler motion toward the position of Fig. 2. At the same time, the upper pivot connection 98 moves the aft flap 82 rearwardly relative to the fore flap 20, also with substantial Fowler motion, toward the position of Fig. 2. This opens a first slot 102 between the fore flap 20 and the rear cove panel 66 of the wing 10. It also opens a second slot 104, between the aft flap 82 and a rear cove panel 106 of the fore flap 20.

To move the flap assembly 18 from the position of Fig. 2 to that of Fig. 3 (which is the landing configuration), the rotary hinge 58 is rotated further counterclockwise. This causes the flaps 20 and 82 to move a moderate distance further rearwardly, and also to rotate downwardly to a substantial degree until they reach their fully extended position of Fig. 3.

## Claims

1. A flap assembly (18) for an airfoil (10) having upper (12) and lower (14) surfaces, a forward end and a rear end (16), a longitudinal axis and a transverse axis, said flap assembly (18) comprising:

a. a mounting structure (22) located at a first lower location at the rear end (16) of the airfoil (10),

b. a fore flap (20) having a stowed first position (Fig. 1) above said mounting structure (22) at the rear end (16) of said airfoil and movable rearwardly to a fully extended second position,

c. a link mounting means (26) having a lower first pivot connecting means (42) attached to said mounting structure (22) at a first connecting location, and an upper second pivot connecting means (44) mounted to said fore flap (20) at an upper second connecting location,

d. a first track mounting (24) comprising first track means (40) and a third connecting means (36) pivotally connected to said fore flap (20) and also operatively connected to said first track means (40) at a third connecting location positioned forwardly of said second connecting location, wherein relative forward and rearward movement of said third connecting means (36) is constrained to be along said first track means (40) on a forward and rear first path of travel having a substantial longitudinal path component, and with said fore flap (20) in its stowed first position, initial rearward movement of said fore flap (20) causes said second pivot connecting means (44) to move in a rearward path having a substantial longitudinal path component so as to provide substantial fowler motion for said fore flap (20), and further movement of said fore flap (20) to its fully extended position causes said fore flap (20) to deflect to a substantially downwardly and rearwardly extending position,

e. an aft flap (82) connected to said fore flap (20) by fourth pivot connecting means (94) and having a third stowed position adjacent said fore flap (20), and movable rearwardly to a fourth fully deployed position, where said aft flap (82) is spaced from said fore flap (20), and whereby said aft flap (82) is connected to said link mounting means (26) by fifth connecting means (98) at a fifth connecting location, whereby rearward movement of said link mounting means (26) moves said aft flap (82) toward its fourth position, characterized in that the said fifth connecting means is a fifth pivot connecting means (98) and that said aft flap (82) is mounted to said fore flap (20) by second track mounting means (86) comprising second track means (88) mounted to said fore flap (20) and fourth connecting means (92) including said fourth pivot connecting means (94) which is connected to said second track means (88) so as to be movable along said second track means (88).

2. A flap assembly for an airfoil according to claim 1, characterized in that said fourth connecting location (near 98) is spaced from said first connecting location (near 42) at a distance greater than a distance which said second connecting location (near 44) is spaced from said first connecting location (near 42), whereby rearward movement of said link mounting means (26) moves said aft flap (82) rearwardly a greater distance than said fore flap (20) is moved.

3. A flap assembly (18) for an airfoil (10) according to claim 1, characterized in that said fore flap (20) also has an intermediate position (Fig. 2) between said stowed position (Fig. 1) and said extended second position (Fig. 3), with said fore flap (20) in its intermediate position forming a slot (102) between said airfoil (10) and said fore flap (20).

## Patentansprüche

1. Klappenanordnung (18) für einen Tragflügel (10), der eine obere (12) und eine untere (14) Fläche, ein vorderes Ende und ein hinteres Ende (16), eine Längsachse und eine Querachse besitzt, wobei die Klappenanordnung (18) umfaßt:

a. einen Tragteil (22), der an einer ersten unteren Stelle am hinteren Ende (16) des Tragflügels (10) angeordnet ist,

b. eine vordere Klappe (20), die eine eingezogene erste Stellung (Figur 1) besitzt, in der sie oberhalb des Tragteils (22) am hinteren Ende (16) des Tragflügels angeordnet ist, und die in eine ganz ausgefahrene, zweite Stellung rückwärtsbewegbar ist,

c. einen Traglenker (26) mit einer aus einer Schwenklagerung bestehenden, unteren ersten Verbindungseinrichtung (42), die am Tragteil (22) an einer ersten Verbindungsstelle angebracht ist, und mit einer aus einer Schwenklagerung bestehenden, oberen zweiten Verbindungseinrichtung (44), die an der vorderen Klappe (20) an einer oberen zweiten Verbindungsstelle montiert ist,

d. einen ersten Führungsträger (24) mit einer ersten Führungsanordnung (40) und einer dritten Verbindungseinrichtung (36), die mit der vorderen Klappe (20) schwenkbar verbunden ist und die mit der ersten Führungsanordnung (40) an einer dritten Verbindungsstelle wirkungsverbunden ist, die vor der zweiten Verbindungsstelle angeordnet ist, wobei die relative Vorwärts- und Rückwärtsbewegung der dritten Verbindungseinrichtung (36) nur längs der ersten Führungsanordnung (40) auf einer vor- und rückwärtsgerichteten ersten Bewegungsbahn erfolgen kann, die eine beträchtliche Bahnkomponente in der Längsrichtung besitzt, und bei in ihrer eingezogenen ersten Stellung befindlicher vorderer Klappe (20) deren Rückwärtsbewegung zunächst die zweite Verbindungseinrichtung bildende Schwenklagerung (44) sich rückwärts längs einer Bahn bewegt, die eine beträchtliche Bahnkomponente in der Längsrichtung hat, so daß die Vorderklappe (20) bei ihrer weiteren Bewegung in ihre ganz ausgefahrene Stellung in eine Stellung ausgelenkt wird, in der sie sich im wesentlichen abwärts und rückwärts erstreckt,

e. eine hintere Klappe (82), die mit der vorderen Klappe (20) durch eine vierte Verbindungseinrichtung schwenkbar verbunden ist und die in eine vierte, ganz ausgefahrene Stellung rückwärtsbewegbar ist, in der die hintere Klappe (82) im Abstand von der vorderen Klappe (20) angeordnet ist, wobei die hintere Klappe (82) mit dem Traglenker (26) an einer fünften Verbindungsstelle durch eine fünfte Verbindungseinrichtung (98) verbunden ist und eine Rückwärtsbewegung des Traglenkers (26) die hintere Klappe (82) in ihre vierte Stellung hin bewegt,

dadurch gekennzeichnet,

daß die fünfte Verbindungseinrichtung eine Schwenklagerung (98) ist und daß die hintere Klappe (82) auf der vorderen Klappe (20) durch einen zweiten Führungsträger (86) montiert ist, der eine auf der vorderen Klappe (20) montierte, zweite Führungsanordnung (88) und eine vierte Verbindungseinrichtung (92) besitzt, die die vierte Schwenklagerung (94) umfaßt, die mit der zweiten Führungsanordnung (88) derart verbunden ist, daß die vierte Schwenklagerung (94) längs der zweiten Führungsanordnung bewegbar ist.

2. Klappenanordnung für einen Tragflügel nach Anspruch 1, dadurch gekennzeichnet, daß die vierte Verbindungsstelle (bei 98) in einem Abstand von der ersten Verbindungsstelle (bei 42) angeordnet ist, der größer ist als der Abstand der zweiten Verbindungsstelle (bei 44) von der ersten Verbindungsstelle (bei 42), so daß bei einer Rückwärtsbewegung des Traglenkers (26) die hintere Klappe (82) über eine größere Strecke rückwärtsbewegt wird als die vordere Klappe (20).

3. Klappenanordnung (18) für einen Tragflügel nach Anspruch 1, dadurch gekennzeichnet, daß die vordere Klappe (20) auch eine Zwischenstellung (Figur 2) zwischen der eingezogenen Stellung (Figur 1) und der ausgefahrenen zweiten Stellung (Figur 3) besitzt und in der Zwischenstellung eine zwischen dem Tragflügel (10) und der vorderen Klappe (20) angeordneten Schlitz (102) begrenzt.

## Revendications

1. Ensemble à volet (18) destiné à un profil aérodynamique (10) ayant des surfaces supérieure (12) et inférieure (14), une extrémité avant et une extrémité arrière (16), un axe longitudinal et un axe transversal, l'ensemble à volet (18) comprenant:

a. une structure de montage (22) ayant un premier emplacement inférieur à l'extrémité arrière (16) du profil (10),

b. un volet avant (20) ayant une première position repliée (figure 1) au-dessus de la structure de montage (22) à l'extrémité arrière (16) du profil et mobile vers l'arrière vers une seconde position totalement déployée,

c. un dispositif de montage à bielle (26) ayant un premier dispositif inférieur de raccordement (42) par articulation fixé à la structure de montage (22) à un premier emplacement de raccordement, et un second dispositif supérieur de raccordement (44) par articulation monté sur le volet arrière (20) à un second emplacement supérieur de raccordement,

d. un premier dispositif de montage à voie (24) comprenant une première voie (40) et un troisième dispositif de raccordement (36) articulé sur le volet avant (20) et raccordé aussi à la première voie (40) à un troisième emplacement de raccordement placé en avant du second emplacement de raccordement, si bien que le déplacement relatif vers l'avant et vers l'arrière du troisième dispositif de raccordement (36) est obligé de s'effectuer suivant la première voie (40) suivant un premier trajet avant-arrière de déplacement ayant une composante longitudinale importante, et, avec le volet arrière dans sa première position repliée, le déplacement initial vers l'arrière du volet avant (20) provoque un déplacement du second dispositif de raccordement (44) par articulation suivant un trajet tourné vers l'arrière et ayant une composante longitudinale importante si bien qu'un déplacement important de type hypersustentateur est assuré au volet avant (20) et un déplacement supplémentaire du volet avant (20) vers sa position totalement déployée provoque une déviation du volet avant (20) sensiblement vers un position dirigée vers le bas et vers l'arrière,

e. un volet arrière (82) raccordé au volet avant (20) par un quatrième dispositif de raccordement (94) par articulation et ayant une troisième position repliée adjacente· au volet avant (20) et mobile vers l'arrière vers une quatrième position totalement déployée dans laquelle le volet arrière (82) est distant du volet avant (20) et tel que le volet arrière (82) est raccordé au dispositif de montage à bielle (26) par un cinquième dispositif de raccordement (98) disposé à une cinquième emplacement de raccordement, si bien que la déplacement vers l'arrière du dispositif de montage à bielle (26) déplace le volet arrière (82) vers sa quatrième position, caractérisé en ce que le cinquième dispositif de raccordement est un cinquième dispositif de raccordement (98) par articulation, et en ce que le volet arrière (82) est monté sur le volet avant (20) par un second dispositif (86) de montage à voie comprenant une seconde voie (88) montée sur le volet avant (20) et le quatrième dispositif de raccordement (92) comprenant le quatrième dispositif de raccordement (94) par articulation qui est raccordé à la seconde voie (88) afin qu'il soit mobile le long de la seconde voie (88).

2. Ensemble à volet destiné à un profil, selon la revendication 1, caractérisé en ce que le quatrième emplacement de raccordement (prés de 98) est séparé du premier emplacement de raccordement (prés de 42) par une distance supérieure à la distance séparant le second emplacement de raccordement (prés de 44) du premier emplacement de raccordement (prés de 42) si bien que le déplacement vers l'arrière du dispositif de montage à bielle (26) déplace le volet arrière (82) vers l'arrière sur une distance supérieure à la distance de déplacement du volet avant (20).

3. Ensemble à volet (18) destiné à un profil, selon la revendication 1, caractérisé en ce que le volet avant (20) a aussi une position intermédiaire (figure 2) comprise entre la position repliée (figure 1) et la seconde position déployée (figure 3), le volet avant (20), dans sa position intermédiaire, formant une fente (102) entre le profil (10) et le volet avant (20).

FIG.1

FIG.2

FIG. 3

0 081 610